# FASCICULE DE BREVET EUROPEEN

(11) **EP 1 775 500 B1**
(45) Date de publication et mention de la délivrance du brevet: **26.03.2008**
(21) Numéro de dépôt: 06301046.6
(22) Date de dépôt: 12.10.2006
(51) Int. Cl.: F16H 57/04

(54) **Boîte de vitesses de véhicule automobile**
Fahrzeuggetriebe
Vehicle transmission

(30) Priorité: 13.10.2005 FR 0510460
(43) Date de publication de la demande: 18.04.2007
(73) Titulaire: PEUGEOT CITROËN AUTOMOBILES S.A., 78140 Vélizy Villacoublay (FR)
(72) Inventeur: Chantreau, Marc, 14280 Authie (FR)

(56) Documents cités:
- DE-A1- 3 441 843
- DE-A1- 10 337 908
- DE-A1- 19 912 328
- DE-C- 316 376

## Description

La présente invention concerne une boîte de vitesses et un véhicule automobile comprenant une telle boîte de vitesses.

Particulièrement, l'invention concerne une boîte de vitesses d'un véhicule, notamment d'un véhicule automobile comportant un carter contenant au moins deux couples de pignons coopérant deux à deux, chacun étant apte à être engagé avec un arbre secondaire et des moyens de distribution d'huile de lubrification sur chaque couple de pignons.

Il est connu différents types d'appareils de lubrification des éléments d'engrainement d'une boîte de vitesse de véhicule automobile.

Dans les appareils de lubrification par barbotage, le carter de la boîte de vitesses contient une grande quantité d'huile de lubrification de sorte que les pignons d'engrenage barbotent dans de l'huile, c'est-à-dire que ceux-ci sont constamment entourés d'huile de lubrification.

Il est également connu des appareils de lubrification sous pression comprenant une pompe spécifique propre à aspirer l'huile de lubrification au fond du carter pour la remonter dans un réservoir fixé en partie supérieure du carter. L'huile ainsi remontée dans le réservoir est ensuite distribuée vers l'ensemble des pignons d'engrenage engagés et non engagés à l'aide de conduites ou rampes.

Toutefois, ces pompes sont encombrantes et coûteuses.

Il est également connu des appareils de lubrification par gravité dans lesquels une couronne de différentiel, utilisée comme pompe, est adaptée pour remonter l'huile du fond du carter dans un réservoir propre à distribuer l'huile sur l'ensemble des pignons d'engrenage engagés et non engagés.

Ces appareils sont utilisés pour diminuer le barbotage des pignons dans l'huile au fond du carter et pour permettre de diminuer les pertes dues à la traînée.

Toutefois, l'état de lubrification des engrenages dépend de la vitesse du véhicule. En effet, à faible vitesse du véhicule, la couronne de différentiel est entraînée lentement de sorte que les pignons d'engrenage de la boîte de vitesses sont peu lubrifiés. En conséquence, les pignons d'engrenage s'abîment rapidement.

Au contraire, à vitesse élevée du véhicule, la couronne de différentiel est entraînée rapidement de sorte que les pignons d'engrenage sont fortement lubrifiés. En conséquence une grande quantité d'huile de lubrification est mise en mouvement et augmente les pertes dues à la traînée.

L'invention a pour but de réguler la lubrification des pignons d'engrenage afin de limiter la lubrification au strict nécessaire aussi bien à faible vitesse qu'à vitesse élevée du véhicule.

Le document DE 19912328 décrit un système de distribution d'huile comportant un manchon qui obture ou libère les orifices de passage pour distribuer l'huile seulement sur certains couples de pignons en fonction de l'état de fonctionnement de la boîte de vitesses. Le manchon est coulissant et est équipé de deux orifices d'écoulement.

Le document DE 19912328 mentionné ci-dessus décrit une boîte de vitesses ayant les caractéristiques du préambule de la revendication 1.

L'invention a pour objet une boîte de vitesses du type précité, selon la revendication 1.

L'invention a également pour objet un véhicule automobile comprenant une boîte de vitesses selon l'une quelconque des caractéristiques mentionnées ci-dessus.

L'invention sera mieux comprise à la lecture de la description qui va suivre, donnée uniquement à titre d'exemple et faite en se référant aux dessins, sur lesquels :
- la figure 1 est une vue en coupe transversale d'une boîte de vitesses selon un premier mode de réalisation de l'invention ;
- la figure 2 est une vue en coupe suivant la ligne II-II de la figure 1 d'une boîte de vitesses, illustrée sur la figure 1 ; et
- la figure 3 est une vue en coupe suivant la ligne III-III de la figure 1 d'une boîte de vitesses, illustrée sur la figure 1 ;

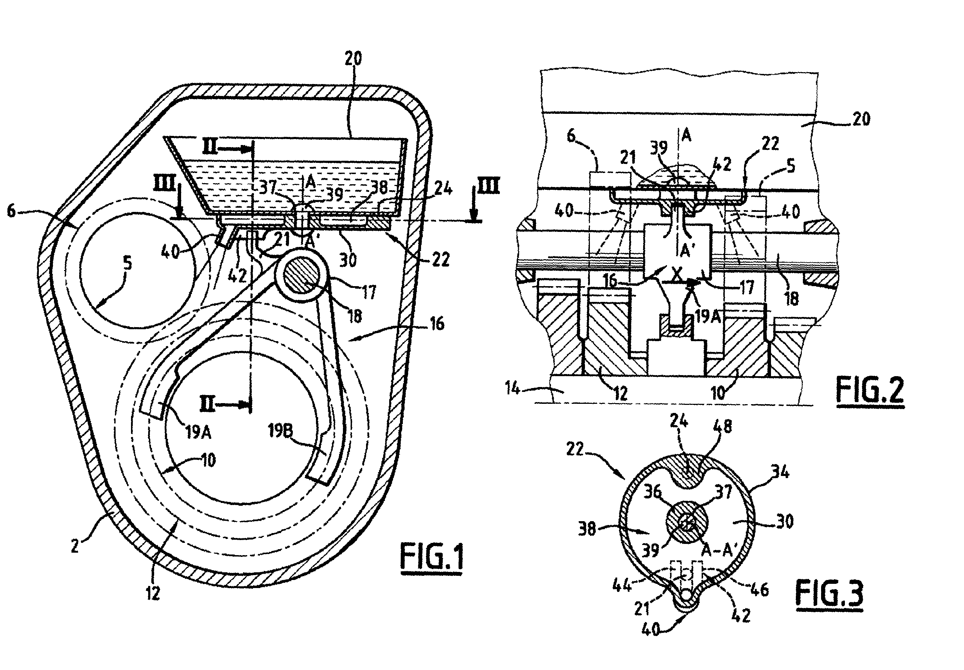

Une boîte de vitesses selon un mode de réalisation de l'invention, est illustrée schématiquement sur la figure 1.

Cette boîte de vitesses comprend un carter 2, des pignons d'engrenage primaires 5, 6 aptes à être engrénés chacun avec un pignon d'engrenage secondaire 10, 12, pour créer des couples de pignons coopérant deux à deux.

Les pignons d'engrenage primaires 5, 6 sont fixés à un arbre primaire non représenté, positionné dans une partie supérieure du carter.

Les pignons d'engrenage secondaires 10, 12, sont montés fous, les uns à côté des autres, autour d'un arbre secondaire 14, positionné en vis-à-vis et en dessous de l'arbre primaire. L'arbre secondaire 14 est propre à entraîner l'arbre d'entraînement des roues du véhicule.

Le carter 2 comprend en outre une fourchette de passage des vitesses 16 montée sur un arbre de guidage 18 fixé aux parois du carter 2 au-dessus et parallèlement à l'arbre secondaire.

La fourchette 16 est adaptée pour être déplacée en translation suivant l'arbre de guidage 18 entre deux pignons 10, 12 d'engrenage secondaires adjacents. La fourchette est entraînée par des moyens d'entraînement, non représentés, pour solidariser l'un ou l'autre de ces pignons 10, 12 avec l'arbre secondaire 14, en fonction de la vitesse choisie par le conducteur du véhicule.

La fourchette 16 de passage des vitesses comprend un manchon 17 monté mobile en translation autour de l'arbre de guidage 18.

Le manchon 17 est muni de deux bras 19A, 19B s'étendant radialement et adaptés pour commander l'engagement d'un pignon d'engrenage secondaire 10 ou 12, avec l'arbre secondaire et d'un doigt d'entraînement 21 s'étendant radialement dans une direction opposée à la direction des deux bras 19A, 19B. Suivant une autre architecture, le doigt 21 pourra être supporté sur un des bras 19A ou 19B

Le carter 2 comprend en outre des moyens de distribution d'huile de lubrification adaptés pour distribuer de l'huile de lubrification sur le couple de pignons engagé 6, 12 ou 5, 10 avec l'arbre secondaire.

Ces moyens de distribution comprennent un réservoir 20 d'huile de lubrification fixé à une paroi du carter dans une partie supérieure de celui-ci et un boîtier distributeur 22 articulé au réservoir 20.

Le réservoir 20 est adapté pour recevoir de l'huile de lubrification recueillie au fond du carter 2, et remontée dans le réservoir 20 à l'aide d'une couronne de différentiel ou d'une pompe, non représentée. Il est muni d'un orifice de passage 24 de l'huile du réservoir 20 vers le boîtier distributeur 22.

Le boîtier distributeur 22 est par exemple, moulé d'une seule pièce dans une matière plastique.

Il présente une forme de cuvette et comprend une paroi de fond 30 en forme de couronne, les bords extérieur et intérieur de la paroi de fond 30 sont équipés d'un rebord extérieur 34 et respectivement d'un rebord intérieur 36 pour former, d'une part un passage 37 central traversant le boîtier, et d'autre part une chambre d'alimentation 38 annulaire ouverte sur une de ses faces.

Le boîtier 22 est articulé au réservoir 20 autour d'un axe de rotation A-A' de façon à ce que la face ouverte de chambre d'alimentation 38 soit en communication fluidique avec l'orifice de passage 24 pour permettre l'écoulement de l'huile du réservoir 20 vers la chambre d'alimentation 38.

A cet effet, des moyens de fixation 39 de type par sertissage ou boulonnage, traversent le passage 37 et sont fixés d'une part, contre la paroi de fond du réservoir 20 et d'autre part, contre la paroi de fond 30 du boîtier.

La face extérieure de la paroi de fond 30 est munie d'un bec de distribution 40 s'étendant en saillie et dirigé vers le couple de pignons d'engrenage 5, 10 ou 6, 12.

Le bec de distribution 40 est en communication fluidique avec la chambre d'alimentation 38 et forme un orifice d'écoulement de l'huile de lubrification situé dans la chambre 38 vers les pignons d'engrenage.

La paroi de fond 30 est équipée d'une glissière 42 formée de deux parois d'appui 44, 46 s'étendant parallèlement vers le passage central 37.

La glissière 42 est adaptée pour recevoir le doigt d'entraînement 21 de la fourchette de passage des vitesses. Lorsque la fourchette 16 est déplacée le long de l'arbre de guidage 18, le doigt d'entraînement 21 solidaire de celle-ci est propre à entraîner le boîtier 22 en rotation autour de l'axe A-A' entre une position d'obturation du boîtier et deux positions d'ouverture de celui-ci.

Un bourrelet 48 est formé sur la paroi de fond 30. Il est disposé contre la face interne du rebord extérieur 34 en vis-à-vis du bec de distribution 40 et s'étend sur un secteur angulaire défini. Selon une autre architecture, le bourrelet 48 pourrait être disposé sur un autre endroit du rebord extérieur 34.

Ce bourrelet 48 est propre à venir au droit de l'orifice de passage 24 et à obturer celui-ci lorsque le boîtier 22 est dans une position angulaire prédéfinie appelée position d'obturation.

En fonctionnement, lorsque le boîtier 22 est dans une position dans laquelle une droite passant par le bec de distribution 40 et par le bourrelet 48 est perpendiculaire à l'arbre de guidage 18, la face supérieure du bourrelet 48 est en regard de l'orifice de passage 24 du réservoir et obture l'orifice de passage 40 de sorte que l'huile de lubrification ne peut pas passer du réservoir 20 à la chambre d'alimentation 38. Dans cette position d'obturation du boîtier de distribution, l'huile de lubrification ne s'écoule pas du réservoir 20 vers la chambre d'alimentation 38.

Comme illustrée sur la figure 2, lorsque la fourchette 16 est entraînée en translation dans une direction x pour engager le couple de pignons 5 et 10 situé à droite de la fourchette avec l'arbre secondaire, le doigt d'entraînement 21 fait pivoter le boîtier 22 autour de l'axe A-A' dans un sens anti-horaire. La face ouverte de la chambre d'alimentation 38 est en vis-à-vis de l'orifice de passage 24 du réservoir de sorte que l'huile de lubrification s'écoule dans la chambre.

Parallèlement, le bec de distribution 40 est orienté vers la droite dans une position dans laquelle seuls le couple de pignons 5 et 10 situés à droite de la fourchette 16 et engagés avec l'arbre d'entraînement, sont lubrifiés.

Lorsque la fourchette 16 est entraînée en translation dans une direction inverse à la direction x pour engager le couple de pignons 6 et 12 situé à gauche de la fourchette 16 avec l'arbre secondaire, le doigt d'entraînement 21 fait pivoter le boîtier 22 autour de l'axe A-A' dans un sens horaire. L'orifice de passage 24 du réservoir est en vis-à-vis de la face ouverte de la chambre d'alimentation 38 de sorte que l'huile de lubrification s'écoule dans celle-ci.

Parallèlement, le bec de distribution 40 est dirigé vers la gauche dans une position dans laquelle seuls le couple de pignons 6 et 12 situés à gauche de la fourchette 16 et engagés avec l'arbre secondaire 14, sont lubrifiés.

Avantageusement, les moyens de distribution d'huile de lubrification selon l'invention permettent de limiter la lubrification au strict nécessaire à faible vitesse du véhicule lorsque le niveau d'huile remontée dans le réservoir au moyen de la couronne différentielle est réduit.

Avantageusement, les moyens de distribution permettent également de limiter le retour d'huile dans le fond du carter de la boîte de vitesses dans les autres situations de roulage du véhicule automobile de sorte qu'il permet de réduire les pertes entraînées.

Avantageusement, les moyens de distribution d'huile permettent de réduire le volume d'huile global nécessaire à la lubrification et donc le dimensionnement de la pompe lorsque ces moyens de distribution sont utilisés dans un appareil de lubrification sous pression.

## Revendications

1. Boîte de vitesses d'un véhicule, notamment d'un véhicule automobile comportant un carter (2) contenant au moins deux couples de pignons (5, 10 ou 6, 12) coopérant deux à deux, chacun étant apte à être engagé avec un arbre secondaire (14) et des moyens de distribution (20, 21, 22, 44, 46) d'huile de lubrification sur chaque couple de pignons (5, 10 ou 6, 12), les moyens de distribution (20, 21, 22, 44, 46) étant adaptés pour distribuer de l'huile de lubrification seulement sur certains couples de pignons (5, 10 ou 6, 12) en fonction de l'état de fonctionnement de la boîte de vitesses, **caractérisée en ce que** les moyens de distribution (20, 21, 22, 44, 46) comprennent :
- un réservoir (20), muni d'au moins un orifice de passage (24) de l'huile de lubrification ;
- un boîtier distributeur (22) monté mobile en déplacement par rapport au réservoir (20) et comprenant un unique orifice d'écoulement (40) adapté pour être en communication fluidique avec l'orifice de passage (24), lorsque le boîtier distributeur (22) est positionné dans au moins une position d'ouverture ; et une paroi d'obturation (48) adaptée pour obturer l'orifice de passage (24), lorsque le boîtier distributeur (22) est positionné dans au moins une position d'obturation.

2. Boîte de vitesses selon la revendication 1, **caractérisée en ce que** les moyens de distribution (20, 21, 22, 44, 46) sont adaptés pour distribuer de l'huile de lubrification uniquement sur le couple de pignons (5, 10 ou 6, 12) engagé avec l'arbre secondaire (14).

3. Boîte de vitesses selon l'une quelconque des revendications 1 et 2, **caractérisée en ce qu**'elle comprend au moins une fourchette (16) de passage des vitesses montée mobile en translation par rapport au carter (2) pour commander l'engagement d'au moins un couple de pignons (5, 10, ou 6, 12) avec l'arbre secondaire (14) ; les moyens de distribution (20, 21, 22, 44, 46) comprenant des moyens de coopération (21) avec ladite fourchette (16) pour distribuer de l'huile de lubrification seulement sur certains couples de pignons (5, 10 ou 6, 12) en fonction de la position de la fourchette (16).

4. Boîte de vitesses selon la revendication 3, **caractérisée en ce que** le boîtier distributeur (22) comprend au moins une paroi d'appui (44, 46), et **en ce que** ladite fourchette (16) comprend au moins un doigt d'entraînement (21) adapté pour venir en appui contre la ou chaque paroi d'appui (44, 46) pour déplacer le boîtier distributeur (22) entre la ou chaque position d'ouverture et la ou chaque position d'obturation.

5. Boîte de vitesses selon la revendication 4, **caractérisée en ce que** le boîtier distributeur (22) est propre à pivoter autour d'un axe de rotation (A-A'), la paroi d'obturation (48) s'étendant le long d'un secteur angulaire défini autour de l'axe de rotation (A-A').

6. Boîte de vitesses selon l'une quelconque des revendications 4 et 5, **caractérisée en ce que** le boîtier distributeur (22) est déplaçable entre une première position d'ouverture dans laquelle ledit orifice d'écoulement (40) est positionné de façon à lubrifier uniquement un couple de pignons (5, 10 ou 6, 12), et une deuxième position d'ouverture dans laquelle l'orifice d'écoulement (40) est positionné de façon à lubrifier uniquement un autre couple de pignons (5, 10 ou 6, 12).

7. Boîte de vitesses selon l'une quelconque des revendications 1 à 6, **caractérisée en ce que** le boîtier distributeur (22) présente une forme de cuvette et comprend une chambre d'alimentation (38) ouverte sur une de ses faces, le boîtier distributeur (22) étant articulé au réservoir (20) autour d'un axe de rotation (A-A'), de façon à ce que la face ouverte de la chambre d'alimentation (38) soit en communication fluidique avec l'orifice de passage (24).

## Claims

1. Gearbox of a vehicle, particularly a motor vehicle, having a casing (2) containing at least two pairs of pinions (5, 10 or 6, 12) interacting in pairs, each pair being engageable with a layshaft (14), and means (20, 21, 22, 44, 46) for distributing lubricating oil to each pair of pinions (5, 10 or 6,12), the distribution means (20, 21, 22, 44, 46) being adapted to distribute lubricating oil to certain pairs of pinions (5, 10 or 6, 12) only, according to the operating state of the gearbox, **characterized in that** the distribution means (20, 21, 22, 44, 46) comprise:
- a reservoir (20) provided with at least one hole (24) for the passage of the lubricating oil;
- a distribution box (22) mounted movably with respect to the reservoir (20) and comprising a single outlet hole (40) adapted to establish fluid communication with the passage hole (24) when the distribution box (22) is positioned in at least one opening position, and a sealing wall (48) adapted to seal the passage hole (24) when the distribution box (22) is positioned in at least one sealing position.

2. Gearbox according to Claim 1, **characterized in that** the distribution means (20, 21, 22, 44, 46) are adapted to distribute lubricating oil only to the pair of pinions (5, 10 or 6, 12) which are engaged with the layshaft (14).

3. Gearbox according to either of Claims 1 and 2, **characterized in that** it comprises at least one gear shift fork (16) mounted movably by translation with respect to the casing (2) to cause at least one pair of pinions (5, 10 or 6, 12) to engage with the layshaft (14), the distribution means (20, 21, 22, 44, 46) comprising means (21) of interaction with the said fork (16) for distributing lubricating oil only to certain pairs of pinions (5, 10 or 6, 12) according to the position of the fork (16).

4. Gearbox according to Claim 3, **characterized in that** the distribution box (22) comprises at least one bearing wall (44, 46) and **in that** the said fork (16) comprises at least one drive pin (21) adapted to bear on the bearing wall or on each of the bearing walls (44, 46), in order to move the distribution box (22) between the opening position or each of the opening positions and the sealing position or each of the sealing positions.

5. Gearbox according to Claim 4, **characterized in that** the distribution box (22) can pivot about an axis of rotation (A-A'), the bearing wall (48) extending through an angular sector defined about the axis of rotation (A-A') .

6. Gearbox according to either of Claims 4 and 5, **characterized in that** the distribution box (22) is movable between a first opening position, in which the said outlet hole (40) is positioned so as to lubricate only one pair of pinions (5, 10 or 6, 12), and a second opening position, in which the outlet hole (40) is positioned so as to lubricate only another pair of pinions (5, 10 or 6, 12).

7. Gearbox according to any one of Claims 1 to 6, **characterized in that** the distribution box (22) is bowl-shaped and comprises a feed chamber (38) open on one of its faces, the distribution box (22) being pivoted on the reservoir (20) about an axis of rotation (A-A') in such a way that the open face of the feed chamber (38) is in fluid communication with the passage hole (24).

## Patentansprüche

1. Schaltgetriebe eines Fahrzeugs, insbesondere eines Kraftfahrzeugs, das ein Gehäuse (2), das mindestens zwei Paare von Zahnrädern (5, 10 oder 6, 12) enthält, die paarweise zusammenwirken, wobei jedes geeignet ist, um mit einer Nebenwelle (14) in Eingriff zu kommen, und Mittel zur Verteilung (20, 21, 22, 44, 46) von Schmieröl auf jedem Paar von Zahnrädern (5, 10 oder 6, 12) aufweist, wobei die Verteilungsmittel (20, 21, 22, 44, 46) geeignet sind, um Schmieröl in Abhängigkeit vom Betriebszustand des Schaltgetriebes nur auf bestimmte Paare von Zahnrädern (5, 10 oder 6, 12) zu verteilen, **dadurch gekennzeichnet, dass** die Verteilungsmittel (20, 21, 22, 44, 46) aufweisen:
- ein Reservoir (20), das mit mindestens einer Durchgangsöffnung (24) für das Schmieröl versehen ist;
- ein Verteilergehäuse (22), das bezüglich des Reservoirs (20) verschiebebeweglich montiert ist und eine einzige Durchflussöffnung (40), die geeignet ist, um mit der Durchgangsöffnung (24) in Strömungsverbindung zu stehen, wenn das Verteilergehäuse (22) in mindestens einer Öffnungsstellung positioniert ist; und eine Verschlusswand (48) aufweist, die geeignet ist, um die Durchgangsöffnung (24) zu verschließen, wenn das Verteilergehäuse (22) in mindestens einer Verschlusstellung positioniert ist.

2. Schaltgetriebe nach Anspruch 1, **dadurch gekennzeichnet, dass** die Verteilungsmittel (20, 21, 22, 44, 46) geeignet sind, um Schmieröl nur auf dem Paar von Zahnrädern (5, 10 oder 6, 12) zu verteilen, das mit der Nebenwelle (14) in Eingriff ist.

3. Schaltgetriebe nach einem der Ansprüche 1 und 2, **dadurch gekennzeichnet, dass** es mindestens eine Schaltgabel (16) zum Einlegen der Gänge aufweist, die translationsbeweglich bezüglich des Gehäuses (2) montiert ist, um den Eingriff mindestens eines Paars von Zahnrädern (5, 10 oder 6, 12) mit der Nebenwelle (14) zu steuern; wobei die Verteilungsmittel (20, 21, 22, 44, 46) Mittel (21) zum Zusammenwirken mit der Schaltgabel (16) aufweisen, um das Schmieröl in Abhängigkeit von der Stellung der Schaltgabel (16) nur auf bestimmte Paare von Zahnrädern (5, 10 oder 6, 12) zu verteilen.

4. Schaltgetriebe nach Anspruch 3, **dadurch gekennzeichnet, dass** das Verteilergehäuse (22) mindestens eine Auflagewand (44, 46) aufweist, und dass die Schaltgabel (16) mindestens einen Antriebsfinger (21) aufweist, der geeignet ist, um gegen die oder jede Auflagewand (44, 46) in Auflage zu kommen, um das Verteilergehäuse (22) zwischen der oder jeder Öffnungsstellung und der oder jeder Verschlussstellung zu verschieben.

5. Schaltgetriebe nach Anspruch 4, **dadurch gekennzeichnet, dass** das Verteilergehäuse (22) in der Lage ist, um eine Drehachse (A-A') zu schwenken, wobei die Verschlusswand (48) sich entlang eines Winkelsektors erstreckt, der um die Drehachse (A-A') herum definiert ist.

6. Schaltgetriebe nach einem der Ansprüche 4 und 5, **dadurch gekennzeichnet, dass** das Verteilergehäuse (22) zwischen einer ersten Öffnungsstellung, in der die Durchflussöffnung (40) so positioniert ist, dass nur ein Paar von Zahnrädern (5, 10 oder 6, 12) geschmiert wird, und einer zweiten Öffnungsstellung verschiebbar ist, in der die Durchflussöffnung (40) so positioniert ist, dass nur ein anderes Paar von Zahnrädern (5, 10 oder 6, 12) geschmiert wird.

7. Schaltgetriebe nach einem der Ansprüche 1 bis 6, **dadurch gekennzeichnet, dass** das Verteilergehäuse (22) die Form einer Schale hat und eine Versorgungskammer (38) aufweist, die an einer ihrer Seiten offen ist, wobei das Verteilergehäuse (22) am Reservoir (20) um eine Drehachse (A-A') derart angelenkt ist, dass die offene Seite der Versorgungskammer (38) in Strömungsverbindung mit der Durchgangsöffnung (24) steht.
